# EUROPEAN PATENT SPECIFICATION

(11) **EP 3 595 220 B1**
(45) Date of publication and mention of the grant of the patent: **13.09.2023**
(21) Application number: 18817793.5
(22) Date of filing: 14.06.2018
(51) Int. Cl.: H04L 1/18, H04L 1/16, H04L 5/00

(54) **METHOD AND APPARATUS FOR SENDING AND RECEIVING FEEDBACK INFORMATION**
VERFAHREN UND VORRICHTUNG ZUM SENDEN UND EMPFANGEN VON FEEDBACKINFORMATIONEN
PROCÉDÉ ET APPAREIL POUR L'ENVOI ET LA RÉCEPTION D'INFORMATIONS DE RÉTROACTION

(30) Priority: 16.06.2017 CN 201710459591
(43) Date of publication of application: 15.01.2020
(73) Proprietor: Huawei Technologies Co., Ltd., Shenzhen, Guangdong 518129 (CN)
(72) Inventor: ZHOU, Yongxing, Shenzhen Guangdong 518129 (CN); XUE, Lixia, Shenzhen Guangdong 518129 (CN); SUN, Hao, Shenzhen Guangdong 518129 (CN)
(74) Representative: Körber, Martin Hans
(86) International application number: PCT/CN2018/091187
(87) International publication number: WO 2018/228457

(56) References cited:
- CN-A- 102 355 341
- CN-A- 103 873 186
- NTT DOCOMO ET AL: "CBG based (re)transmission, preemption indication and subsequent trasnmission in NR", 3GPP DRAFT; R1-1708484, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Hangzhou; 20170515 - 20170519 14 May 2017 (2017-05-14), XP051273676, Retrieved from the Internet: URL:http://www.3gpp.org/ftp/Meetings_3GPP_ SYNC/RAN1/Docs/ [retrieved on 2017-05-14]
- MEDIATEK INC: "Considerations on CB grouping for multiple HARQ ACK/NACK bits per", 3GPP DRAFT; R1-1704463 CONSIDERATIONS ON CB GROUPING FOR MULTIPLE HARQ AN BITS PER TB_FINAL, 3RD GENERATION PARTNERSHIP PROJECT (3GPP), MOBILE COMPETENCE CENTRE ; 650, ROUTE DES LUCIOLES ; F-06921 SOP , vol. RAN WG1, no. Spokane, USA; 20170403 - 20170407 2 April 2017 (2017-04-02), XP051242607, Retrieved from the Internet: URL:http://www.3gpp.org/ftp/Meetings_3GPP_ SYNC/RAN1/Docs/ [retrieved on 2017-04-02]
- CONVIDA WIRELESS: "Discussion on HARQ-Ack Feedback Mechanisms", 3GPP DRAFT; R1-1705834_DISCUSSION ON HARQ-ACK FEEDBACK MECHANISMS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRAN , vol. RAN WG1, no. Spokane, USA; 20170403 - 20170407 2 April 2017 (2017-04-02), XP051243946, Retrieved from the Internet: URL:http://www.3gpp.org/ftp/Meetings_3GPP_ SYNC/RAN1/Docs/ [retrieved on 2017-04-02]
- HUAWEI ET AL: "Discussion on CBG-based feedback", 3GPP DRAFT; R1-1706964, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Hangzhou, China; 20170515 - 20170519 6 May 2017 (2017-05-06), XP051261587, Retrieved from the Internet: URL:http://www.3gpp.org/ftp/tsg_ran/WG1_RL 1/TSGR1_89/Docs/ [retrieved on 2017-05-06]
- HUAWEI et al.: "Discussion on CBG-Based Feedback", 3GPP TSG RAN WG1 Meeting #89 R1-1706964, 5 June 2017 (2017-06-05), XP051261587,

## Description

### TECHNICAL FIELD

This application relates to the communications field, and in particular, to a method and an apparatus for sending feedback information, and a method and an apparatus for receiving feedback information.

### BACKGROUND

In a wireless communications system, to reduce coding and decoding complexity and improve transmission reliability, one transport block (transport block, TB) is divided into a plurality of code block groups (code block group, CBG), and one CBG includes one or more code blocks (code block, CB). After being transmitted from a media access control (media access control, MAC) layer to a physical layer, the TB is divided into a plurality of CBs at the physical layer, and is divided into a plurality of CBGs. In addition, an independent verification code is added to each of the plurality of CBs or CBGs, and the TB also carries a verification code.

After the TB is transmitted to a receive end, the receive end decodes each CB included in the TB, and verifies a decoding result of each CB or CBG based on the verification code of the CB or CBG to determine whether the decoding result of the CBG is correct. In addition, a decoding result of the entire TB also needs to be verified based on the verification code of the TB. After performing the foregoing decoding and verification processes, the receive end feeds back a receiving status of each CBG.

To meet user requirements, a 5^{th} generation (5th generation, 5G) mobile communications system imposes higher requirements on a transmission latency and resource utilization. For example, in an ultra-reliable low-latency communication (ultra reliable low latency communication, URLLC) scenario, a typical requirement is that uplink and downlink user-plane latencies cannot exceed 0.5 millisecond (ms) and a bit error rate within 1 ms cannot exceed 0.0001%. An existing method for sending feedback information and an existing method for receiving feedback information cannot meet the requirements of the 5G mobile communications system.

NTT DOCOMO et al: "CBS based (re)transmission preemption indication and subsequent transmission in NR", 3GPP DRAFT; R1-1708484; Hangzhou, China, May 15-19, 2017 discusses three mechanisms of an NR, namely CBS-based (re)-transmission, pre-emption indication and subsequent transmission and proposes a number of implementations.

MEDIATEK INC: "Considerations on CB grouping for multiple HARQ ACK/NACK bits per TB", 3GPP DRAFT; R1-1704463; Spokane, USA, April 3-7, 2017 discusses considerations for selecting CBG granularity/CBG number when supporting more than one HARQ-ACK bits per TB.

CONVIDA WIRELESS: "Discussion on HARQ-Ack feedback mechanisms", 3GPP DRAFT; R1-1705834; Spokane, USA, April 3-7, 2017 discusses design options for HARQ-Ack feedback.

### SUMMARY

In view of this, this application provides a method and an apparatus for sending feedback information, and a method and an apparatus for receiving feedback
information, to reduce time for processing feedback information, improve air interfaceresource utilization, and improve transmission reliability of feedback information, so as to meet requirements of a 5G mobile communications system.

The present invention is defined by a method for sending feedback information according to independent claim 1, a method for receiving feedback information according to independent claim 2, a terminal device for sending feedback information according to independent claim 3, a network device for receiving feedback information according to independent claim 4 and a computer program product according to independent claim 5 and 6. Additional features of the invention are provided in the dependent claims.

### BRIEF DESCRIPTION OF DRAWINGS

FIG. 1 shows a communications system applicable to this application;
FIG. 2 is a schematic diagram of a CBG division method according to this application;
FIG. 3 is a schematic diagram of a method for sending feedback information according to this application;
FIG. 4 is a schematic diagram of another method for sending feedback information according to this application;
FIG. 5 is a schematic diagram of a method for receiving feedback information according to this application;
FIG. 6 is a schematic diagram of another method for receiving feedback information according to this application;
FIG. 7 is a schematic diagram of a possible terminal device according to this application;
FIG. 8 is a schematic diagram of another possible terminal device according to this application;
FIG. 9 is a schematic diagram of still another possible terminal device according to this application;
FIG. 10 is a schematic diagram of yet another possible terminal device according to this application;
FIG. 11 is a schematic diagram of a possible network device according to this application;
FIG. 12 is a schematic diagram of another possible network device according to this application;
FIG. 13 is a schematic diagram of still another possible network device according to this application; and
FIG. 14 is a schematic diagram of yet another possible network device 3 according to this application.

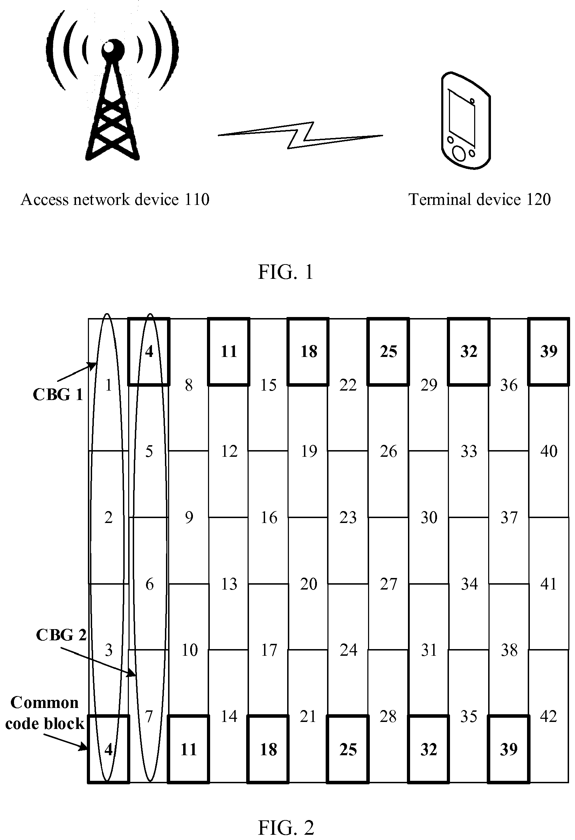

In the following, embodiments of the invention are described with particular reference to figures 1-3, 5, 7-8 and 11-12. The other embodiments and/or examples of the disclosure are provided for illustrative purposes to support a better understanding of the invention.

### DESCRIPTION OF EMBODIMENTS

The following describes technical solutions in this application with reference to the accompanying drawings.

FIG. 1 shows a communications system 100 applicable to this application. The communications system 100 includes an access network device 110 and a terminal device 120. The access network device 110 and the terminal device 120 communicate with each other through a wireless network. When the terminal device 120 sends data, a wireless communications module may encode information for transmission. Specifically, the wireless communications module may obtain a specified quantity of data bits to be sent to the access network device 110 through a channel. These data bits are, for example, data bits generated by a processing module, received from another device, or stored in a storage module. The data bits may be included in one or more transport blocks (which may also be referred to as information blocks or data blocks), and the transport block may be segmented to generate a plurality of code blocks.

In this application, the terminal device may be referred to as an access terminal, user equipment (user equipment, UE), a subscriber unit, a subscriber station, a mobile station, a mobile console, a remote station, a remote terminal, a mobile device, a user terminal, a terminal, a wireless communications device, a user agent, or a user apparatus. The access terminal may be a cellular phone, a handheld device having a wireless communication function, a computing device, another processing device connected to a wireless modem, a vehicle-mounted device, a wearable device, or user this way, transmission latency of the second feedback information can be reduced.

Optionally, a bit rate of the uplink data information is lower than a first bit rate threshold, or a bit rate of the information carried by the long uplink control channel is lower than a second bit rate threshold, or a quantity of bits of the information that the long uplink control channel is capable of carrying is less than 3 bits.

A terminal device generates the second feedback information used to feed back the receiving status of each of the N TBs, only when the uplink data information or the information carried by the long uplink control channel satisfies the foregoing conditions. When the uplink data information or the information carried by the long uplink control channel does not satisfy the foregoing conditions, the terminal device may generate, according to the method in the first aspect, the second feedback information used to feed back the receiving status of each of the M CBGs, or may generate, according to the method in the first aspect, the second feedback information used to feed back the receiving status of each of the N TBs, thereby further improving flexibility of generating the second feedback information by the terminal device.

Optionally, the generating second feedback information based on a type of a PUCCH for carrying feedback information includes: when the type of the PUCCH is a long PUCCH, and/or when uplink data information or information carried by a long uplink control channel is not sent in a slot in which the short PUCCH is located, generating, by the device, the second feedback information used to feed back the receiving statuses of the M CBGs.

When the PUCCH for carrying the second feedback information satisfies at least one of the foregoing two conditions, the UE may generate the second feedback information according to the method in the first aspect, for example, generate the second feedback information used to feed back the receiving statuses of the M CBGs. In this way, the second feedback information may be generated flexibly based on an actual situation.

According to a third aspect, a method for receiving feedback information is provided. The method includes: sending M CBGs, where the M CBs belong to N TBs, M is an integer greater than 1, and N is a positive integer; and detecting first feedback information on a first resource and a second resource, where the first resource is different from the second resource, and the first feedback information is used to feed back a receiving status of each of the M CBGs or a receiving status of each of the N TBs.

According to the method for receiving feedback information provided in this embodiment, a base station detects the first feedback information on different resources, so that UE may flexibly select a resource matching an amount of the first feedback information, thereby improving resource utilization.

Optionally, the first resource is used to carry the feedback information used to feed back the receiving status of each of the M CBGs, and the second resource is used to carry the feedback information used to feed back the receiving status of each of the N TBs.

Feedback information with different information bits may have different modulation and coding schemes. Therefore, when receiving the first feedback information on the first resource, the base station may process the first feedback information by using a demodulation and decoding scheme corresponding to the first resource; and when receiving the first feedback information on the second resource, the base station may process the first feedback information by using a demodulation and decoding scheme corresponding to the second resource, and does not need to try different demodulation and decoding schemes. Therefore, the base station may rapidly obtain content in the first feedback information, and perform subsequent processing based on the content in the first feedback information.

According to a fourth aspect, a method for receiving feedback information is provided. The method includes: sending M CBGs, where the M CBGs belong to N TBs, M is an integer greater than 1, and N is a positive integer; and detecting second feedback information based on a type of a PUCCH for carrying feedback information, where the second feedback information is used to feed back a receiving status of each of the M CBGs or a receiving status of each of the N TBs.

The type of the PUCCH may be configured by a base station. After configuring the PUCCH for sending the second feedback information, the base station may detect the second feedback information on the corresponding PUCCH. Different PUCCHs correspond to different coverage requirements and different latency requirements. When the coverage requirement is relatively high or the latency requirement is not high, a network device may configure a long PUCCH for a terminal device. When the coverage requirement is relatively low or the latency requirement is relatively high, the network device may configure a short PUCCH for the terminal device. In this way, the base station may flexibly determine a resource for carrying feedback information, thereby improving resource utilization.

Optionally, when the type of the PUCCH is a short PUCCH and the terminal device sends, in a slot in which the short PUCCH is located, uplink data information or information carried by a long uplink control channel, the second feedback information is used to feed back the receiving status of each of the N TBs.

Whether the terminal device is to send, in the slot in which the short PUCCH is located, the uplink data information or the information carried by the long uplink control channel is scheduled by the network device. Therefore, when UE sends, in the slot in which the short PUCCH is located, the uplink data information or the information carried by the long uplink control channel, the base station may determine that the second feedback information is used to feed back the receiving statuses of the N TBs, may process the second feedback information by using a demodulation and decoding scheme corresponding to the second feedback information, does not need to try different demodulation and decoding schemes, may rapidly obtain content of the second feedback information, and perform subsequent processing based on the content in the second feedback information, thereby reducing uplink feedback latency.

Optionally, a bit rate of the uplink data information is lower than a first bit rate threshold, or a bit rate of the information carried by the long uplink control channel is lower than a second bit rate threshold, or a quantity of bits of the information that the long uplink control channel is capable of carrying is less than 3 bits.

The UE generates the second feedback information used to feed back the receiving status of each of the N TBs, only when the uplink data information or the information carried by the long uplink control channel satisfies the foregoing conditions. When the uplink data information or the information carried by the long uplink control channel does not satisfy the foregoing conditions, the UE may generate, according to the method in the first aspect, the second feedback information used to feed back the receiving status of each of the M CBGs, or may generate, according to the method in the first aspect, the second feedback information used to feed back the receiving status of each of the N TBs, thereby further improving flexibility of generating the second feedback information by the UE.

According to a fifth aspect, an apparatus for sending feedback information is provided. The apparatus may be a terminal device or a chip in a terminal device. The apparatus may include a processing unit and a transceiver unit. When the apparatus is a terminal device, the processing unit may be a processor, and the transceiver unit may be a transceiver. The terminal device may further include a storage unit, and the storage unit may be a memory. The storage unit is configured to store an instruction, and the processing unit executes the instruction stored in the storage unit, so that the terminal device performs the method in the first aspect. When the apparatus is a chip in a terminal device, the processing unit may be a processor, and the transceiver unit may be an input/output interface, a pin, a circuit, or the like. The processing unit executes an instruction stored in a storage unit, so that the terminal device performs the method in the first aspect. The storage unit may be a storage unit (for example, a register or a cache) in the chip, or may be a storage unit (for example, a read-only memory or a random access memory) outside the chip in the terminal device.

According to a sixth aspect, an apparatus for sending feedback information is provided. The apparatus may be a terminal device or a chip in a terminal device. The apparatus may include a processing unit and a transceiver unit. When the apparatus is a terminal device, the processing unit may be a processor, and the transceiver unit may be a transceiver. The terminal device may further include a storage unit, and the storage unit may be a memory. The storage unit is configured to store an instruction, and the processing unit executes the instruction stored in the storage unit, so that the terminal device performs the method in the second aspect. When the apparatus is a chip in a terminal device, the processing unit may be a processor, and the transceiver unit may be an input/output interface, a pin, a circuit, or the like. The processing unit executes an instruction stored in a storage unit, so that the terminal device performs the method in the second aspect. The storage unit may be a storage unit (for example, a register or a cache) in the chip, or may be a storage unit (for example, a read-only memory or a random access memory) outside the chip in the terminal device.

According to a seventh aspect, an apparatus for receiving feedback information is provided. The apparatus may be a network device or a chip in a network device. The apparatus may include a processing unit and a transceiver unit. When the apparatus is a network device, the processing unit may be a processor, and the transceiver unit may be a transceiver. The network device may further include a storage unit, and the storage unit may be a memory. The storage unit is configured to store an instruction, and the processing unit executes the instruction stored in the storage unit, so that the network device performs the method in the third aspect. When the apparatus is a chip in a network device, the processing unit may be a processor, and the transceiver unit may be an input/output interface, a pin, a circuit, or the like. The processing unit executes an instruction stored in a storage unit, so that the network device performs the method in the third aspect. The storage unit may be a storage unit (for example, a register or a cache) in the chip, or may be a storage unit (for example, a read-only memory or a random access memory) outside the chip in the network device.

According to an eighth aspect, an apparatus for receiving feedback information is provided. The apparatus may be a network device or a chip in a network device. The apparatus may include a processing unit and a transceiver unit. When the apparatus is a network device, the processing unit may be a processor, and the transceiver unit may be a transceiver. The network device may further include a storage unit, and the storage unit may be a memory. The storage unit is configured to store an instruction, and the processing unit executes the instruction stored in the storage unit, so that the network device performs the method in the fourth aspect. When the apparatus is a chip in a network device, the processing unit may be a processor, and the transceiver unit may be an input/output interface, a pin, a circuit, or the like. The processing unit executes an instruction stored in a storage unit, so that the network device performs the method in the fourth aspect. The storage unit may be a storage unit (for example, a register or a cache) in the chip, or may be a storage unit (for example, a read-only memory or a random access memory) outside the chip in the network device.

According to a ninth aspect, this application further provides a network system. The network system includes the apparatus for sending feedback information in the fifth aspect and the apparatus for receiving feedback information in the seventh aspect.

According to a tenth aspect, this application further provides a network system. The network system includes the apparatus for sending feedback information in the sixth aspect and the apparatus for receiving feedback information in the eighth aspect.

According to an eleventh aspect, a computer program product is provided. The computer program product includes computer program code. When the computer program code is run by a communications unit and a processing unit, or a transceiver and a processor in a terminal device, the terminal device is enabled to perform the method in the first aspect.

According to a twelfth aspect, a computer program product is provided. The computer program product includes computer program code. When the computer program code is run by a communications unit and a processing unit, or a transceiver and a processor in a terminal device, the terminal device is enabled to perform the method in the second aspect.

According to a thirteenth aspect, a computer program product is provided. The computer program product includes computer program code. When the computer program code is run by a communications unit and a processing unit, or a transceiver and a processor in a terminal device, the network device is enabled to perform the method in the third aspect.

According to a fourteenth aspect, a computer program product is provided. The computer program product includes computer program code. When the computer program code is run by a communications unit and a processing unit, or a transceiver and a processor in a terminal device, the network device is enabled to perform the method in the fourth aspect.

According to a fifteenth aspect, a computer storage medium is provided, and is configured to store computer software instructions used by the terminal device in the first aspect. The computer software instructions include a program designed to perform the method in the first aspect.

According to a sixteenth aspect, a computer storage medium is provided, and is configured to store computer software instructions used by the terminal device in the second aspect. The computer software instructions include a program designed to perform the method in the second aspect.

According to a seventeenth aspect, a computer storage medium is provided, and is configured to store computer software instructions used by the network device in the third aspect. The computer software instructions include a program designed to perform the method in the third aspect.

According to an eighteenth aspect, a computer storage medium is provided, and is configured to store computer software instructions used by the network device in the fourth aspect. The computer software instructions include a program designed to perform the method in the fourth aspect.

According to a nineteenth aspect, a communications chip is provided. The communications chip stores an instruction. When the instruction is run on a terminal device, the communications chip is enabled to perform the method in the first aspect.

According to a twentieth aspect, a communications chip is provided. The communications chip stores an instruction. When the instruction is run on a terminal device, the communications chip is enabled to perform the method in the second aspect.

According to a twenty-first aspect, a communications chip is provided. The communications chip stores an instruction. When the instruction is run on a network device, the communications chip is enabled to perform the method in the third aspect.

According to a twenty-second aspect, a communications chip is provided. The communications chip stores an instruction. When the instruction is run on a network device, the communications chip is enabled to perform the method in the fourth aspect.

### BRIEF DESCRIPTION OF DRAWINGS

FIG. 1 shows a communications system applicable to this application;
FIG. 2 is a schematic diagram of a CBG division method according to this application;

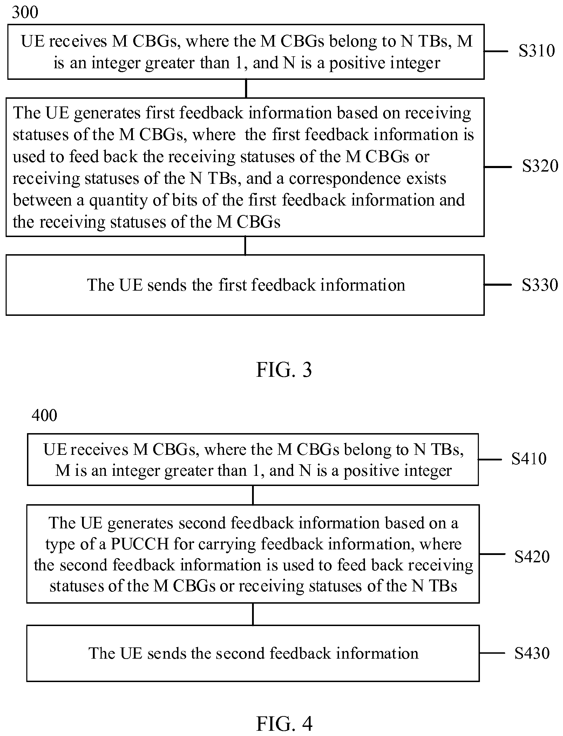

FIG. 3 is a schematic diagram of a method for sending feedback information according to this application;
FIG. 4 is a schematic diagram of another method for sending feedback information according to this application;

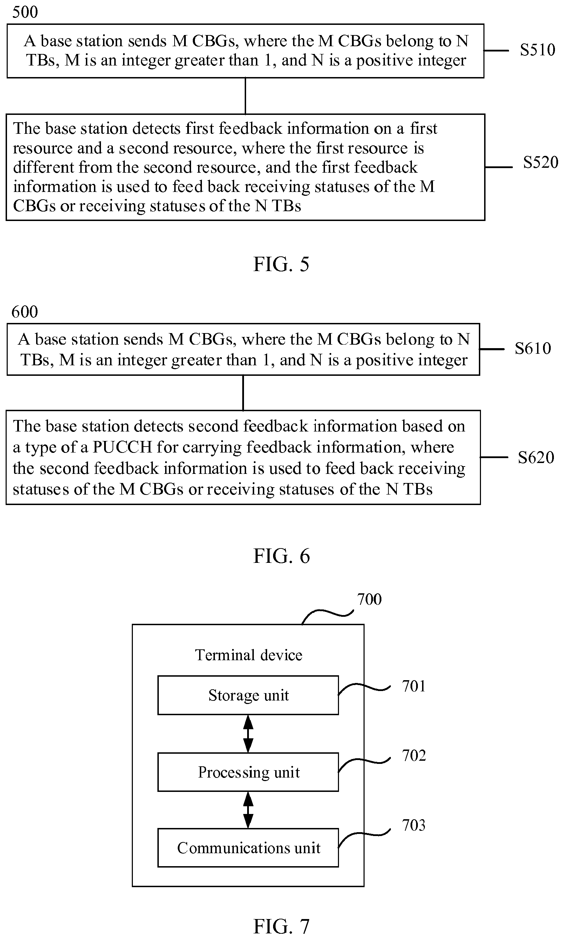

FIG. 5 is a schematic diagram of a method for receiving feedback information according to this application;
FIG. 6 is a schematic diagram of another method for receiving feedback information according to this application;
FIG. 7 is a schematic diagram of a possible terminal device according to this application;

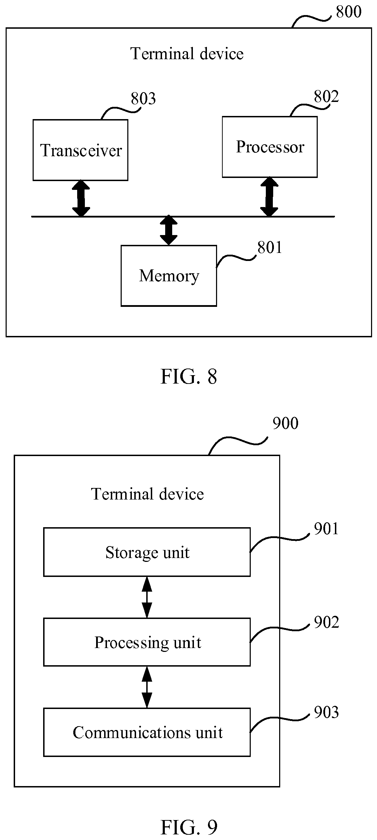

FIG. 8 is a schematic diagram of another possible terminal device according to this application;
FIG. 9 is a schematic diagram of still another possible terminal device according to this application;

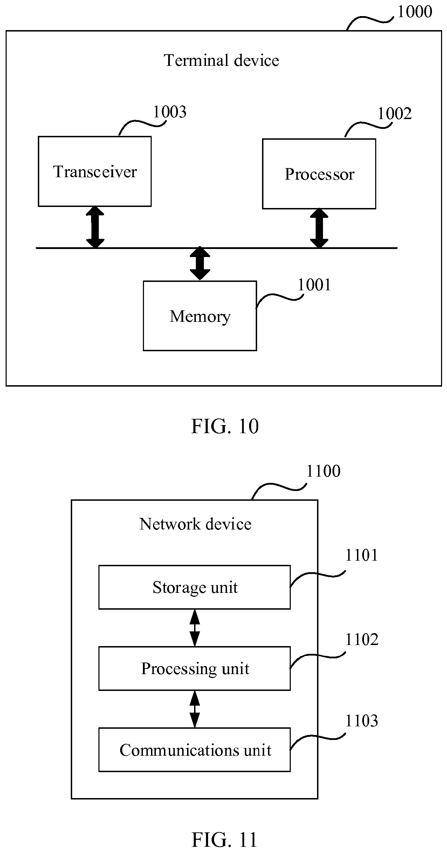

FIG. 10 is a schematic diagram of yet another possible terminal device according to this application;
FIG. 11 is a schematic diagram of a possible network device according to this application;

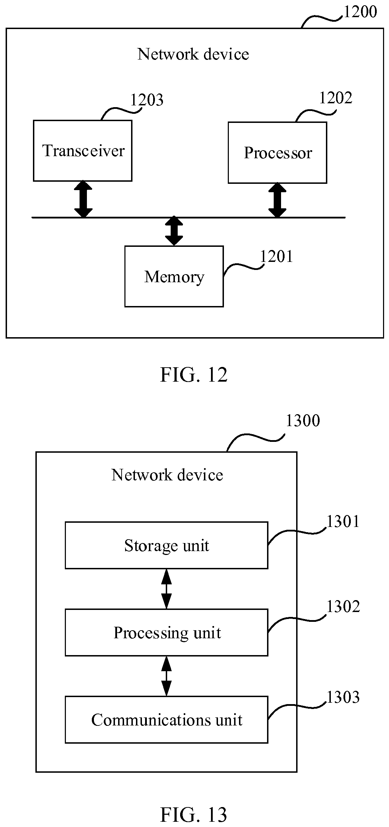

FIG. 12 is a schematic diagram of another possible network device according to this application;
FIG. 13 is a schematic diagram of still another possible network device according to this application; and

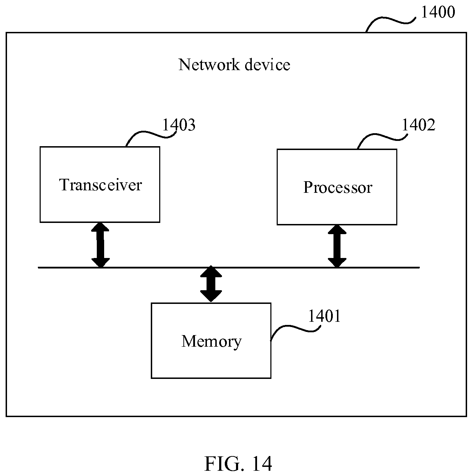

FIG. 14 is a schematic diagram of yet another possible network device according to this application.

### DESCRIPTION OF EMBODIMENTS

The following describes technical solutions in this application with reference to the accompanying drawings.

FIG. 1 shows a communications system 100 applicable to this application. The communications system 100 includes an access network device 110 and a terminal device 120. The access network device 110 and the terminal device 120 communicate with each other through a wireless network. When the terminal device 120 sends data, a wireless communications module may encode information for transmission. Specifically, the wireless communications module may obtain a specified quantity of data bits to be sent to the access network device 110 through a channel. These data bits are, for example, data bits generated by a processing module, received from another device, or stored in a storage module. The data bits may be included in one or more transport blocks (which may also be referred to as information blocks or data blocks), and the transport block may be segmented to generate a plurality of code blocks.

In this application, the terminal device may be referred to as an access terminal, user equipment (user equipment, UE), a subscriber unit, a subscriber station, a mobile station, a mobile console, a remote station, a remote terminal, a mobile device, a user terminal, a terminal, a wireless communications device, a user agent, or a user apparatus. The access terminal may be a cellular phone, a handheld device having a wireless communication function, a computing device, another processing device connected to a wireless modem, a vehicle-mounted device, a wearable device, or user equipment in a 5G communications system.

The access network device may be a base transceiver station (base transceiver station, BTS) in a code division multiple access (code division multiple access, CDMA) system, a NodeB (node B, NB) in a wideband code division multiple access (wideband code division multiple access, WCDMA) system, an evolved NodeB (evolutional node B, eNB) in a long term evolution (long term evolution, LTE) system, or a gNB (gNB) in a 5G communications system. The foregoing base stations are only used as examples for illustration. Alternatively, the access network device may be a relay node, an access point, a vehicle-mounted device, a wearable device, or another type of device.

The foregoing communications system applicable to this application is merely an example, and the communications system applicable to this application is not limited thereto. For example, the communications system may include another quantity of access network devices and another quantity of terminal devices. For another example, the communications system 100 applicable to this application may alternatively be a device-to-device (device to device, D2D) communications system, and the access network device 110 and the terminal device 120 are two communications devices in the D2D communications system.

For ease of understanding of this application, before a method for sending feedback information and a method for receiving feedback information provided in this application are described, concepts in this application are briefly described first.

In this application, one TB may be divided into one or more CBGs, and each CBG includes at least one CB. For example, a quantity of CBGs into which one TB is divided may be determined according to a quantity of bits of the TB, or may be determined according to a quantity of time domain and/or frequency domain resources occupied by the TB, or may be directly configured by using higher layer signaling.

It should be noted that the CBG and the CB are only different division manners for the TB. When all CBs in a CBG pass verification, it may be considered that the CBG has been successfully received. Therefore, in this application, the meaning of receiving a CB is equivalent to that of receiving a CBG.

The following briefly describes how to divide a TB.

A CB in a TB may be mapped to a time-frequency resource according to a preset mapping rule. For example, the preset mapping rule is: sequentially performing mapping first in a frequency domain and then in a time domain based on a CB index; or the preset mapping rule is: dividing a frequency domain to which the CB is to be mapped into a plurality of sub frequency domains, and then performing mapping in each sub frequency domain.

Based on the foregoing mapping rules, a division manner for dividing a TB into CBGs may be determined based on a time-frequency resource to which the TB is mapped, for example, a time dimension division manner, a frequency dimension division manner, or a time-frequency two-dimensional division manner. In this manner, the plurality of CBGs obtained through division may or may not have a same CB. Whether the same CB exists in the plurality of CBGs obtained through division depends on the final resource mapping result.

Alternatively, CBs in a TB may be divided into a plurality of CBGs according to another rule (for example, the division manner is unrelated to a time-frequency resource to which TB is mapped, and is related to a quantity of bits of the transport block) or signaling notification. In this manner, the plurality of CBGs obtained through division usually do not have a same CB.

The division manner for a TB is not limited in this application. Two examples are given below, and the two examples should not be construed as a limitation to the division manner for a TB in this application.

Division manner 1 for a TB:
a first TB includes four CBs: a CB 1, a CB 2, a CB 3, and a CB 4, and the first TB may be divided into two CBGs, namely, a CBG 1 and a CBG 2, according to the another rule or an indication of the higher layer signaling, where the CBG 1 includes the CB 1 and the CB 2, and the CBG 2 includes the CB 3 and the CB 4;
a first TB includes eight CBs: a CB 1, a CB 2, a CB 3, a CB 4, a CB 5, a CB 6, a CB 7, and a CB 8, and the first TB may be divided into two CBGs, namely, a CBG 1 and a CBG 2, according to the foregoing mapping rules or an indication of the higher layer signaling, where the CBG 1 includes the CB 1, the CB 2, the CB 3, and the CB 4, and the CBG 2 includes the CB 5, the CB 6, the CB 7, and the CB 8; or
a first TB include eight CBs: a CB 1, a CB 2, a CB 3, a CB 4, a CB 5, a CB 6, a CB 7, and a CB 8, and the first TB may be divided into four CBGs, namely, a CBG 1, a CBG 2, a CBG 3, and a CBG4, according to the foregoing mapping rules or an indication of the higher layer signaling, where the CBG 1 includes the CB 1 and the CB 2, the CBG 2 includes the CB 3 and the CB 4, the CBG 3 includes the CB 5 and the CB 6, and the CBG 4 includes the CB 7 and the CB 8.

Division manner 2 for a TB:
FIG. 2 is a schematic diagram of a TB division manner according to this application. As shown in FIG. 2, a first TB includes 42 CBs, which are mapped to 12 time domain symbols in a sequence of a frequency domain first and a time domain next, and the first TB is divided into 12 CBGs based on dimensions of the time domain symbols. Because a frequency domain resource corresponding to a single time domain symbol is limited, some CBs cannot be mapped to a same time domain symbol. For example, a CBG 1 includes a CB 1 to a CB 4, a CBG 2 includes the CB 4 to a CB 7, and the CB 4 is a common CB for the CBG 1 and the CBG 2.

When a TB transmitted in a communications system is divided into a plurality of CBs, a receive end may send, to a transmit end, feedback information for feeding back a decoding status of each CB. When a small quantity of CBs fail to be decoded, the transmit end only needs to retransmit the CBs that fail to be decoded, and does not need to retransmit the entire TB, thereby improving resource utilization and data transmission efficiency.

However, when a TB includes a relatively large quantity of CBs, a quantity of bits of feedback information that needs to be sent in the foregoing method is also relatively large, and a relatively long processing time is required to generate feedback information and decode the feedback information. In addition, a relatively large quantity of air interface resources need to be configured for transmission of the feedback information. Meanwhile, it is also difficult to ensure transmission reliability of the feedback information including a large quantity of bits.

This application provides a method and an apparatus that can reduce a time for processing feedback information, improve air interface resource utilization, and improve transmission reliability of the feedback information.

A method for sending feedback information provided in this application is described below in detail.

FIG. 3 is a schematic diagram of a method for sending feedback information according to this application. In a method 300, UE as an execution body (or referred to as an "execution device") of the method is merely an example for description, and any device capable of performing the method 300 shall fall within the protection scope of this application. The method 300 includes the following steps.

S310. The UE receives M CBGs, where the M CBGs belong to N TBs, M is an integer greater than 1, and N is a positive integer.

The UE may receive only the CBGs that belong to one TB, that is, N may be equal to 1; or the UE may receive CBGs that belong to two TBs, that is, N may be equal to 2. This application does not limit a quantity of TBs received by the UE and a quantity of CBGs received by the UE, and does not limit whether the UE simultaneously receives the M CBGs either.

S320. The UE generates first feedback information based on receiving statuses of the M CBGs, where the first feedback information is used to feed back the receiving statuses of the M CBGs or receiving statuses of the N TBs, and a correspondence exists between a quantity of bits of the first feedback information and the receiving statuses of the M CBGs.

The UE generates first feedback information based on receiving statuses of the M CBGs includes the following step:
S321. When the receiving statuses of all CBGs included in each of the N TBs indicate that all the CBGs have been successfully received and at least one TB corresponding to all the CBGs has passed verification, or
when the receiving statuses of all CBGs included in each of the N TBs indicate that none of the CBGs has been successfully received, or
when the receiving statuses of all CBGs included in at least one of the N TBs indicate that all the CBGs have been successfully received and at least one TB corresponding to all the CBGs has not passed verification,
the UE generates the first feedback information used to feed back the receiving statuses of the N TBs, where the quantity of bits of the first feedback information is equal to N.

The UE generates first feedback information based on receiving statuses of the M CBGs includes the following step:
S302. When the receiving statuses of all CBGs included in at least one of the N TBs indicate that among all the CBGs, at least one CBG has been successfully received and at least one CBG has not been successfully received, the terminal device generates the first feedback information used to feed back the receiving statuses of the M CBGs, where the quantity of bits of the first feedback information is equal to M.

In S320, the receiving statuses of the M CBGs include the following cases: None of the CBGs has been successfully received (case 1), all the CBGs have been successfully received (case 2), and some of the CBGs have been successfully received while some of the CBGs have not been successfully received (case 3).

It should be noted that, a CBG may have a verification code, for example, cyclic redundancy check (cyclic redundancy check, CRC), or may not have a verification code. When a CBG has a verification code, the CBG passes verification, in other words, the CBG is successfully received, only when all CBs included in the CBG have passed verification and the CBG has passed verification; when the CBG does not have a verification code, it may be considered that the CBG passes verification, in other words, the CBG is successfully received, when all the CBs included in the CBG have passed verification.

In this application, a reception success is a decoding success and a verification success, and a reception failure is a decoding failure or a decoding success and a verification failure. The receiving statuses of the M CBGs are different, and the quantity of bits of the first feedback information also varies. The following describes the foregoing three cases in detail.

### Case 1

None of the M CBGs has been successfully received, that is, the receiving statuses of all the CBGs included in each of the N TBs indicate that none of the CBGs has been successfully received, and in this case, the N TBs all need to be retransmitted. Therefore, feedback does not need to be performed for each CBG or CB, and it needs to feed back only that the N TBs have not been successfully received. For example, the first feedback information may include N bits, and each of the N bits corresponds to one of the N TBs, so that a quantity of bits of feedback information may be reduced. When the quantity of bits of the feedback information is relatively small, a time for generating the feedback information by the UE and a time for decoding the feedback information by a base station are reduced. In addition, only a small quantity of air interface resources are required for transmitting the feedback information, and transmission reliability of the feedback information with a small quantity of bits can also be greatly improved.

In case 1, in an optional example, the first feedback information may alternatively include only one bit, and the bit is used to indicate that all the TBs need to be retransmitted.

### Case 2

All the M CBGs have been successfully received, that is, the receiving statuses of all the CBGs included in each of the N TBs indicate that all the CBGs have been successfully received, and in this case, the UE further needs to verify the N TBs corresponding to the M CBGs.

When the N TBs have passed the verification, the UE may determine that the N TBs have been successfully received, and the UE may feed back the first feedback information including N bits. Each of the N bits corresponds to one of the N TBs, so that a quantity of bits of feedback information can be reduced. In an optional example, the first feedback information may alternatively include only one bit, and the bit is used to indicate that all the TBs have been successfully received.

When some of the N TBs have passed the verification while some of the N TBs have not passed the verification, the UE may determine that some of the N TBs have been successfully received and some of the N TBs have not been successfully received, and the UE may feed back the first feedback information including N bits. Each of the N bits corresponds to one of the N TBs, so that a quantity of bits of feedback information can be reduced.

### Case 3

In the M CBGs, some CBs that belong to one TB have been successfully received while some CBs have not been successfully received, that is, the receiving statuses of all CBs included in at least one of the N TBs indicate that at least one CB has been successfully received and at least one CB has not been successfully received. In this case, the TB needs to be fed back based on a CB or a CBG, that is, the receiving status of each CB or CBG of the TB needs to be fed back. In addition, others of the N TBs also need to be fed back based on the CB or CBG.

For example, the UE receives four CBs, which are a CB 1, a CB 2, a CB 3, and a CB 4, where the CB 1 and the CB 2 belong to a TB 1, and the CB 3 and the CB 4 belong to a TB 2. The four CBs may be understood as four CBGs, and each CBG includes one CB.

When all of the CB 1, the CB 2, the CB 3, and the CB 4 have not been successfully decoded or have not passed verification, or when all of the CB 1, the CB 2, the CB 3, and the CB 4 have passed verification but the TB 1 and the TB 2 have not passed verification, the UE may send first feedback information with content of "00", and the two bits "00" are used to indicate that the TB 1 and the TB 2 have not been successfully received; or the UE may send first feedback information with content of "0", and the one bit "0" is used to indicate that the TB 1 and the TB 2 have not been successfully received.

When all of the CB 1, the CB 2, the CB 3, and the CB 4 have passed verification and both the TB 1 and the TB 2 have passed verification, the UE may send first feedback information with content of "11", and the two bits "11" are used to indicate that the TB 1 and the TB 2 have been successfully received; or the UE may send first feedback information with content of "1", and the one bit "1" is used to indicate that the TB 1 and the TB 2 have not been successfully received.

When the CB 1 and the CB 2 have passed verification and the TB 1 has passed verification, and when the CB 3 and the CB 4 have not been successfully decoded or have not passed verification, the UE may send first feedback information with content of "10", and the two bits are used to indicate that the TB 1 has been successfully received and the TB 2 has not been successfully received.

When the CB 1 has passed verification, and the CB 2, the CB 3, and the CB 4 have not passed verification, the UE may send first feedback information with content of "1000", and the four bits "1000" are used to indicate that the CB 1 has been successfully received and the CB 2, the CB 3, and the CB 4 have not been successfully received.

When the CB 1 has not passed verification, the CB 2, the CB 3, and the CB 4 all have passed verification, and the TB 2 has passed verification, the UE may send first feedback information with content of "0111", and the four bits "0111" are used to indicate that the CB 1 has not been successfully received and the CB 2, the CB 3, and the CB 4 have been successfully received.

As can be known from the foregoing examples, it may be determined that a receiving status of a TB indicates reception failure only when none of CBs or CBGs included in the TB has passed verification, or when all CBs or CBGs included in the TB have passed verification and the TB has not passed verification.

It should be noted that when a CB is not successfully decoded, it may be determined that the CB has not been successfully received. When a CB is successfully decoded, the CB further needs to be verified to determine whether the CB has been successfully received.

In this application, the first feedback information is particularly feedback information used to feed back the receiving statuses of the M CBGs or the receiving statuses of the N TBs, and is not intended to limit a name or a function of the feedback information, and does not mean that there is second feedback information.

In addition, it should also be understood that, in this application, both "when" and "if" mean that the UE or the base station performs corresponding processing in an objective situation, and are not intended to limit time, and the UE or the base station is not necessarily required to have a determining action during implementation, and do not mean any other limitation.

The method 300 further includes the following step.

S330. The UE sends the first feedback information.

The step of sending the first feedback information by the UE includes steps such as modulation, mapping, and rate matching. For a specific sending method, refer to a method for sending feedback information in the prior art. For brevity, details are not described herein.

Optionally, that the UE sends the first feedback information includes the following step:
S331. The UE sends, on a first resource based on a first uplink control channel format, the first feedback information used to feed back the receiving statuses of the M CBGs; or the UE sends, on a second resource based on a second uplink control channel format, the first feedback information used to feed back the receiving statuses of the N TBs, where the first resource is different from the second resource, and/or the first uplink control channel format is different from the second uplink control channel format.

When content fed back through the first feedback information is different, the UE may send the first feedback information on a same resource or on different resources.

In S331, the first resource includes a first time domain resource, a first frequency domain resource, a first code domain resource, and a first space domain resource; and the second resource includes a second time domain resource, a second frequency domain resource, a second code domain resource, and a second space domain resource.

That the first resource is different from the second resource includes at least one of the following cases:
the first time domain resource is different from the second time domain resource;
the first frequency domain resource is different from the second frequency domain resource;
the first code domain resource is different from the second code domain resource; and
the first space domain resource is different from the second space domain resource.

For example, the first time domain resource may be an n^{th} slot, and the second time domain resource may be an (n+1)^{th} slot; the first frequency domain resource may be an m^{th} physical resource block (resource block, RB), and the second frequency domain resource may be an (m+1)^{th} RB; the first code domain resource may be one code word in an orthogonal cover code, and the second code domain resource may be another code word in the orthogonal cover code; and the first space domain resource may be one beam direction, and the second space domain resource may be another beam direction.

A first uplink control channel is an uplink control channel only capable of carrying uplink control information less than 3 bits (for example, 1 bit or 2 bits), and a second uplink control channel is an uplink control channel capable of carrying uplink control information greater than 2 bits.

According to the method for sending feedback information provided in this embodiment, the UE may flexibly select a resource matching an amount of the first feedback information, thereby improving resource utilization.

FIG. 4 is a schematic diagram of another method for sending feedback information according to this application. In a method 400, UE as an execution body (or referred to as an "execution device") of the method is merely an example for description, and any device capable of performing the method 400 shall fall within the protection scope of this application. The method 400 includes the following steps.

S410. The UE receives M CBGs, where the M CBGs belong to N TBs, M is an integer greater than 1, and N is a positive integer.

The UE may receive only CBGs that belong to one TB, that is, N may be equal to 1; or the UE may receive CBGs that belong to two TBs, that is, N may be equal to 2. This application does not limit a quantity of TBs received by the UE and a quantity of CBGs received by the UE, and does not limit whether the UE simultaneously receives the M CBGs either.

S420. The UE generates second feedback information based on a type of a PUCCH for carrying feedback information, where the second feedback information is used to feed back receiving statuses of the M CBGs or receiving statuses of the N TBs.

The type of the PUCCH includes a long PUCCH and a short PUCCH. The long PUCCH occupies 4 to 14 consecutive orthogonal frequency division multiplexing (orthogonal frequency division multiplexing, OFDM)/discrete Fourier transform spread orthogonal frequency division multiplexing (discrete spread OFDM, DFT-s-OFDM) symbols in time domain. The short PUCCH occupies 1 or 2 consecutive OFDM/DFT-s-OFDM symbols in time domain.

According to the method for sending feedback information provided in this embodiment, the UE may flexibly select feedback content of the second feedback information based on the type of the PUCCH, thereby improving resource utilization.

Optionally, that the UE generates second feedback information based on a type of a PUCCH for carrying feedback information includes the following step:

S421. When the type of the PUCCH is a short PUCCH, and the UE sends, in a slot in which the short PUCCH is located, uplink data information or information carried by a long uplink control channel, the UE generates the second feedback information used to feed back the receiving statuses of the N TBs.

The uplink data information is, for example, service data, and the information carried by the long uplink control channel (that is, the long PUCCH) is acknowledgement information or channel state information.

When the UE sends, in the slot in which the short PUCCH is located, the uplink data information or the information carried by the long uplink control channel, because a transmit power at which the UE sends the uplink data information or the information carried by the long uplink control channel is relatively low, a transmit power of the short PUCCH located in the same slot as the information is also limited. Therefore, the short PUCCH cannot carry a relatively large amount of feedback information. To send the feedback information in time, the UE needs to generate the second feedback information used to feed back the receiving statuses of the N TBs. In this way, transmission latency of the second feedback information can be reduced.

Optionally, in S421, a bit rate of the uplink data information is lower than a first bit rate threshold, or a bit rate of the information carried by the long uplink control channel is lower than a second bit rate threshold, or a quantity of bits of the information that the long uplink control channel is capable of carrying is less than 3 bits.

In other words, the UE generates the second feedback information used to feed back the receiving status of each of the N TBs, only when the uplink data information or the information carried by the long uplink control channel in S421 satisfies the foregoing conditions. When the uplink data information or the information carried by the long uplink control channel in S421 does not satisfy the foregoing conditions, the UE may generate, according to the method 300, the second feedback information used to feed back the receiving status of each of the M CBGs, or may generate, according to the method 300, the second feedback information used to feed back the receiving status of each of the N TBs, thereby further improving flexibility of generating the second feedback information by the UE.

For example, when the bit rate of the uplink data information is lower than 1/10, the UE generates the second feedback information used to feed back the receiving status of each of the N TBs, and when the bit rate of the uplink data information is higher than 1/10, the UE generates the second feedback information used to feed back the receiving status of each of the M CBGs; or when the bit rate of the information carried by the long uplink control channel is lower than 1/10, the UE generates the second feedback information used to feed back the receiving status of each of the N TBs, and when the bit rate of the information carried by the long uplink control channel is higher than 1/10, the UE generates the second feedback information used to feed back the receiving status of each of the M CBGs; or when the quantity of bits of the information that the first long uplink control channel is capable of carrying is less than 3 bits, the UE generates the second feedback information used to feed back the receiving status of each of the N TBs, and when the quantity of bits of the information that the first long uplink control channel is capable of carrying is greater than 2 bits, the UE generates the second feedback information used to feed back the receiving status of each of the M CBGs.

Optionally, that the UE generates second feedback information based on a type of a PUCCH for carrying feedback information includes the following step:

S422. When the type of the PUCCH is a long PUCCH, and/or the terminal device does not send, in the slot in which the short PUCCH is located, the uplink data information or the information carried by the long uplink control channel, the terminal device generates the second feedback information used to feed back the receiving statuses of the M CBGs.

When the PUCCH carrying the second feedback information satisfies at least one of the two conditions in S422, the UE may generate the second feedback information according to the method 300, for example, generate the second feedback information used to feed back the receiving statuses of the M CBGs. In this way, the second feedback information may be generated flexibly based on an actual situation.

The method 400 further includes the following step:
S430. The UE sends the second feedback information.

The step of sending the second feedback information by the UE includes steps such as modulation, mapping, and rate matching. For a specific sending method, refer to a method for sending feedback information in the prior art. For brevity, details are not described herein.

The method for sending feedback information provided in this application is described above from the perspective of a transmit end, and a method for receiving feedback information provided in this application is described below from the perspective of a receive end.

FIG. 5 is a schematic diagram of a method for receiving feedback information according to this application. In a method 500, a base station as an execution body (or referred to as an "execution device") of the method is merely an example for description, and any device capable of performing the method 500 shall fall within the protection scope of this application. The method 500 includes the following steps:
S510. The base station sends M CBGs, where the M CBs belong to N TBs, M is an integer greater than 1, and N is a positive integer.
S520. The base station detects first feedback information on a first resource and a second resource, where the first resource is different from the second resource, and the first feedback information is used to feed back receiving statuses of the M CBGs or receiving statuses of the N TBs.

Because UE sends, in different cases (for example, the cases in the method 300), feedback information having different quantities of bits, and the feedback information having different quantities of bits may be sent on different resources, the base station needs to detect the feedback information on different resources.

The first resource and the second resource in the method 500 are the same as the first resource and the second resource in the method 300. The two resources may be specified by a communications system, or may be configured by the base station to the UE by using signaling.

A person skilled in the art may clearly understand that in the method 500, both the base station and the UE may be equivalent to the base station and the UE in the method 300, and information sent and received by the base station corresponds to information received and sent by the UE in the method 300. For brevity, details are not described herein again.

According to the method for receiving feedback information provided in this embodiment, the base station detects the first feedback information on different resources, so that the UE may flexibly select a resource matching an amount of the first feedback information, thereby improving resource utilization.

The first resource is used to carry the first feedback information used to feed back the receiving statuses of the M CBGs, and the second resource is used to carry the first feedback information used to feed back the receiving statuses of the N TBs.

Feedback information with different amounts of data has different modulation and coding schemes. Therefore, when receiving the first feedback information on the first resource, the base station may process the first feedback information by using a demodulation and decoding scheme corresponding to the first resource; and when receiving the first feedback information on the second resource, the base station may process the first feedback information by using a demodulation and decoding scheme corresponding to the second resource, and does not need to try different demodulation and decoding schemes. Therefore, the base station may rapidly obtain content in the first feedback information, and perform subsequent processing based on the content in the first feedback information.

FIG. 6 is a schematic diagram of another method for receiving feedback information according to this application. In a method 600, a base station as an execution body (or referred to as an "execution device") of the method is merely an example for description, and any device capable of performing the method 600 shall fall within the protection scope of this application. The method 600 includes the following steps:
S610. The base station sends M CBGs, where the M CBGs belong to N TBs, M is an integer greater than 1, and N is a positive integer.
S620. The base station detects second feedback information based on a type of a PUCCH for carrying feedback information, where the second feedback information is used to feed back receiving statuses of the M CBGs or receiving statuses of the N TBs.

The type of the PUCCH may be configured by the base station. After configuring the PUCCH for sending the second feedback information, the base station may detect the second feedback information on the corresponding PUCCH. An amount of data to be transmitted varies according to different PUCCHs. When a quantity of CBs sent by the base station is relatively large, a long PUCCH may be configured; and when a quantity of CBs sent by the base station is relatively small, a short PUCCH may be configured, so that the base station can flexibly determine a resource for carrying feedback information, thereby improving resource utilization.

A person skilled in the art may clearly understand that in the method 600, both the base station and the UE may be equivalent to the base station and the UE in the method 400, and information sent and received by the base station corresponds to information received and sent by the UE in the method 400. For brevity, details are not described herein again.

Optionally, when the type of the PUCCH is a short PUCCH and the UE sends, in a slot in which the short PUCCH is located, uplink data information or information carried by a long uplink control channel, the second feedback information is used to feed back the receiving statuses of the N TBs.

The base station determines, based on a received scheduling request of the UE, whether the UE is to send, in the slot in which the short PUCCH is located, the uplink data information or the information carried by the long uplink control channel. Therefore, when the UE sends, in the slot in which the short PUCCH is located, the uplink data information or the information carried by the long uplink control channel, the base station may determine that the second feedback information is used to feed back the receiving statuses of the N TBs, may process the second feedback information by using a demodulation and decoding scheme corresponding to the second feedback information, does not need to try different demodulation and decoding schemes, may rapidly obtain content of the second feedback information, and perform subsequent processing based on the content in the second feedback information, thereby reducing uplink feedback latency.

Optionally, a bit rate of the uplink data information is lower than a first bit rate threshold, or a bit rate of the information carried by the long uplink control channel is lower than a second bit rate threshold, or a format of the long uplink control channel belongs to a format of a first long uplink control channel, and a quantity of bits of information carried by the first long uplink control channel is less than 3 bits.

The UE generates the second feedback information used to feed back the receiving status of each of the N TBs, only when the uplink data information or the information carried by the long uplink control channel satisfies the foregoing conditions. When the uplink data information or the information carried by the long uplink control channel does not satisfy the foregoing conditions, the UE may generate, according to the method 300, the second feedback information used to feed back the receiving status of each of the M CBGs, or may generate, according to the method 300, the second feedback information used to feed back the receiving status of each of the N TBs, thereby further improving flexibility of generating the second feedback information by the UE.

Examples of the method for sending feedback information and the method for receiving feedback information that are provided in this application are described above in detail. It can be understood that, to implement the foregoing functions, the terminal device and the network device each include a corresponding hardware structure and/or software module for performing each function. A person skilled in the art should be easily aware that, in combination with units and algorithm steps in the examples described in the embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that such implementation goes beyond the scope of this application.

In this application, the terminal device and the like may be divided into functional units based on the foregoing method examples. For example, each functional unit may be obtained through division based on a corresponding function, or two or more functions may be integrated into one processing unit. The integrated unit may be implemented in a form of hardware, or may be implemented in a form of a software functional unit. It should be noted that the unit division in this application is an example, and is merely logical function division. There may be another division manner during actual implementation.

When an integrated unit is used, FIG. 7 is a possible schematic structural diagram of the terminal device in the foregoing embodiments. A terminal device 700 includes a processing unit 702 and a communications unit 703. The processing unit 702 is configured to control and manage an action of the terminal device 700. For example, the processing unit 702 is configured to support the terminal device 700 in performing S320 in FIG. 3 and/or is configured to perform another process of the technology described in this specification. The communications unit 703 is configured to support the terminal device 700 in communicating with another network entity, for example, communicating with a network device. The terminal device 700 may further include a storage unit 701, configured to store program code and data of the terminal device 700.

The processing unit 702 may be a processor or a controller, for example, a central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The processing unit 702 may implement or execute various example logical blocks, modules, and circuits described with reference to content disclosed in this application. Alternatively, the processor may be a combination of processors implementing a computing function, for example, a combination of one or more microprocessors or a combination of a DSP and a microprocessor. The communications unit 703 may be a transceiver, a transceiver circuit, or the like. The storage unit 701 may be a memory.

When the processing unit 702 is a processor, the communications unit 703 is a transceiver, and the storage unit 701 is a memory, the terminal device in this application may be a terminal device shown in FIG. 8.

Referring to FIG. 8, the terminal device 800 includes a processor 802, a transceiver 803, and a memory 801. The transceiver 803, the processor 802, and the memory 801 may communicate with each other through an internal connection to transfer a control signal and/or a data signal.

A person skilled in the art may clearly understand that, for the purpose of convenient and brief description, for detailed working processes of the foregoing apparatus and unit, refer to corresponding processes in the foregoing method embodiments, and details are not described herein again.

According to the terminal device 700 and the terminal device 800 that are provided in this application, receiving statuses of N TBs are determined based on receiving statuses of M CBGs. When all the N TBs have been successfully received or none of the N TBs has been successfully received, the receiving statuses of the M CBGs do not need to be fed back one by one, so that a quantity of bits of first feedback information is reduced, and processing speeds of both a transmit end and a receive end are improved. In addition, only a small quantity of air interface resources are required for transmitting the first feedback information, thereby improving resource utilization and transmission reliability.

When an integrated unit is used, FIG. 9 is a possible schematic structural diagram of the terminal device in the foregoing embodiments. A terminal device 900 includes a processing unit 902 and a communications unit 903. The processing unit 902 is configured to control and manage an action of the terminal device 900. For example, the processing unit 902 is configured to support the terminal device 900 in performing S420 in FIG. 4 and/or is configured to perform another process of the technology described in this specification. The communications unit 903 is configured to support the terminal device 900 in communicating with another network entity, for example, communicating with a network device. The terminal device 900 may further include a storage unit 901, configured to store program code and data of the terminal device 900.

The processing unit 902 may be a processor or a controller, for example, a CPU, a general-purpose processor, a DSP, an ASIC, an FPGA or another programmable logic device, a transistor logic device, a hardware component, or any combination thereof. The processing unit 902 may implement or execute various example logical blocks, modules, and circuits described with reference to content disclosed in this application. Alternatively, the processor may be a combination of processors implementing a computing function, for example, a combination of one or more microprocessors or a combination of a DSP and a microprocessor. The communications unit 903 may be a transceiver, a transceiver circuit, or the like. The storage unit 901 may be a memory.

When the processing unit 902 is a processor, the communications unit 903 is a transceiver, and the storage unit 901 is a memory, the terminal device in this application may be a terminal device shown in FIG. 10.

Referring to FIG. 10, the terminal device 1000 includes a processor 1002, a transceiver 1003, and a memory 1001. The transceiver 1003, the processor 1002, and the memory 1001 may communicate with each other through an internal connection to transfer a control signal and/or a data signal.

A person skilled in the art may clearly understand that, for the purpose of convenient and brief description, for detailed working processes of the foregoing apparatus and unit, refer to corresponding processes in the foregoing method embodiments, and details are not described herein again.

According to the terminal device 900 and the terminal device 1000 that are provided in this application, feedback content of second feedback information may be flexibly selected based on a type of a PUCCH, thereby improving resource utilization.

When an integrated unit is used, FIG. 11 is a possible schematic structural diagram of the network device in the foregoing embodiments. The network device 1100 includes a processing unit 1102 and a communications unit 1103. The processing unit 1102 is configured to control and manage an action of the network device 1100. For example, the processing unit 1102 is configured to support the network device 1100 in performing S520 in FIG. 5 and/or is configured to perform another process of the technology described in this specification. The communications unit 1103 is configured to support the network device 1100 in communicating with another network entity, for example, communicating with a terminal device. The network device 1100 may further include a storage unit 1101, configured to store program code and data of the network device 1100.

The processing unit 1102 may be a processor or a controller, for example, a CPU, a general-purpose processor, a DSP, an ASIC, an FPGA or another programmable logic device, a transistor logic device, a hardware component, or any combination thereof. The processing unit 1102 may implement or execute various example logical blocks, modules, and circuits described with reference to content disclosed in this application. Alternatively, the processor may be a combination of processors implementing a computing function, for example, a combination of one or more microprocessors or a combination of a DSP and a microprocessor. The communications unit 1103 may be a transceiver, a transceiver circuit, or the like. The storage unit 1101 may be a memory.

When the processing unit 1102 is a processor, the communications unit 1103 is a transceiver, and the storage unit 1101 is a memory, the network device in this application may be a network device shown in FIG. 12.

Referring to FIG. 12, the network device 1200 includes a processor 1202, a transceiver 1203, and a memory 1201. The transceiver 1203, the processor 1202, and the memory 1201 may communicate with each other through an internal connection to transfer a control signal and/or a data signal.

A person skilled in the art may clearly understand that, for the purpose of convenient and brief description, for detailed working processes of the foregoing apparatus and unit, refer to corresponding processes in the foregoing method embodiments, and details are not described herein again.

According to the network device 1100 and the network device 1200 that are provided in this application, first feedback information is detected on different resources, so that the terminal device may flexibly select a resource matching an amount of the first feedback information, thereby improving resource utilization.

When an integrated unit is used, FIG. 13 is a possible schematic structural diagram of the network device in the foregoing embodiments. A network device 1300 includes a processing unit 1302 and a communications unit 1303. The processing unit 1302 is configured to control and manage an action of the network device 1300. For example, the processing unit 1302 is configured to support the network device 1300 in performing S620 in FIG. 6 and/or is configured to perform another process of the technology described in this specification. The communications unit 1303 is configured to support the network device 1300 in communicating with another network entity, for example, communicating with a terminal device. The network device 1300 may further include a storage unit 1301, configured to store program code and data of the network device 1300.

The processing unit 1302 may be a processor or a controller, for example, a CPU, a general-purpose processor, a DSP, an ASIC, an FPGA or another programmable logic device, a transistor logic device, a hardware component, or any combination thereof. The processing unit 1302 may implement or execute various example logical blocks, modules, and circuits described with reference to content disclosed in this application. Alternatively, the processor may be a combination of processors implementing a computing function, for example, a combination of one or more microprocessors or a combination of a DSP and a microprocessor. The communications unit 1303 may be a transceiver, a transceiver circuit, or the like. The storage unit 1301 may be a memory.

When the processing unit 1302 is a processor, the communications unit 1303 is a transceiver, and the storage unit 1301 is a memory, the network device in this application may be a network device shown in FIG. 14.

Referring to FIG. 14, the network device 1400 includes a processor 1402, a transceiver 1403, and a memory 1401. The transceiver 1403, the processor 1402, and the memory 1401 may communicate with each other through an internal connection to transfer a control signal and/or a data signal.

A person skilled in the art may clearly understand that, for the purpose of convenient and brief description, for detailed working processes of the foregoing apparatus and unit, refer to corresponding processes in the foregoing method embodiments, and details are not described herein again.

A type of a PUCCH may be configured by the network device 1300 or the network device 1400. After configuring a PUCCH for sending second feedback information, the network device 1300 or the network device 1400 may detect the second feedback information on the corresponding PUCCH. Different PUCCHs correspond to different coverage requirements and different latency requirements. When the coverage requirement is relatively high or the latency requirement is not high, the network device 1300 or the network device 1400 may configure a long PUCCH for a terminal device. When the coverage requirement is relatively low or the latency requirement is relatively high, the network device 1300 or the network device 1400 may configure a short PUCCH for the terminal device. In this way, the network device 1300 or the network device 1400 may flexibly determine a resource for carrying feedback information, thereby improving resource utilization.

It should be understood that the transceiver may include a transmitter and a receiver. The transceiver may further include an antenna. There may be one or more antennas. The memory may be an independent device, or may be integrated into the processor. All or some of the foregoing components may be integrated into a chip for implementation, for example, integrated into a baseband chip for implementation.

The apparatus fully corresponds to the network device or the terminal device in the method embodiments, and corresponding modules perform corresponding steps. For example, a sending module or the transmitter performs the sending step in the method embodiments, a receiving module or the receiver performs the receiving step in the method embodiments, and steps other than the sending step and the receiving step may be performed by a processing module or the processor. For a function of a specific module, refer to a corresponding method embodiment. Details are not described herein again.

An embodiment of this application further provides a communications chip. The communications chip stores an instruction. When the instruction is run on the terminal device 700, the terminal device 800, the terminal device 900, or the terminal device 1000, the communications chip is enabled to perform the method corresponding to the terminal device in the foregoing implementations.

An embodiment of this application further provides a communications chip. The communications chip stores an instruction. When the instruction is run on the network device 1100, the network device 1200, the network device 1300, or the network device 1400, the communications chip is enabled to perform the method corresponding to the network device in the foregoing implementations.

Sequence numbers of the foregoing processes do not mean execution sequences in various embodiments of this application. The execution sequences of the processes should be determined based on functions and internal logic of the processes, and should not be construed as any limitation on the implementation processes of the embodiments of this application.

In addition, the term "and/or" in this specification describes only an association relationship for describing associated objects and represents that three relationships may exist. For example, A and/or B may represent the following three cases: Only A exists, both A and B exist, and only B exists. In addition, the character "/" in this specification usually indicates an "or" relationship between the associated objects.

Method or algorithm steps described with reference to the content disclosed in this application may be implemented by hardware, or may be implemented by a processor by executing a software instruction. The software instruction may include a corresponding software module. The software module may be stored in a random access memory (random access memory, RAM), a flash memory, a read-only memory (read only memory, ROM), an erasable programmable read only memory (erasable programmable ROM, EPROM), an electrically erasable programmable read only memory (electrically EPROM, EEPROM), a register, a hard disk, a mobile hard disk, a compact disc read-only memory (CD-ROM), or any other form of storage medium well-known in the art. For example, a storage medium is coupled to a processor, so that the processor can read information from the storage medium and can write information into the storage medium. Certainly, the storage medium may also be a component of the processor. The processor and the storage medium may be located in an ASIC. In addition, the ASIC may be located in a terminal device. Certainly, the processor and the storage medium may exist in a terminal device or a network device as discrete components.

All or some of the foregoing embodiments may be implemented by using software, hardware, firmware, or any combination thereof. When being implemented by using software, all or some of the embodiments may be implemented in a form of a computer program product. The computer program product includes one or more computer instructions. When the computer program instruction is loaded and executed on a computer, the procedures or functions according to this application are fully or partially generated. The computer may be a general-purpose computer, a special-purpose computer, a computer network, or another programmable apparatus. The computer instruction may be stored in a computer-readable storage medium, or may be transmitted by using the computer readable storage medium. The computer instruction may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner. The computer readable storage medium may be any available medium accessible to the computer, or a data storage device, such as a server or a data center integrating one or more available media. The usable medium may be a magnetic medium (for example, a floppy disk, a hard disk, or a magnetic tape), an optical medium (for example, a digital versatile disc (digital versatile disc, DVD), a semiconductor medium (for example, a solid-state drive (solid state disk, SSD)), or the like.

The objectives, technical solutions, and benefits of this application are further described in detail in the foregoing specific embodiments. It should be understood that the foregoing descriptions are merely specific embodiments of this application, but are not intended to limit the protection scope of this application.

The scope of protection of the invention is defined in the appended set of claims.

## Claims

1. A method for sending feedback information performed by a terminal device, comprising:
receiving (S310) M code block groups, CBGs, wherein the M CBGs belong to N transport blocks TBs, M is an integer greater than 1, and N is an integer greater than 1;
generating (S320) first feedback information based on a receiving status of each of the M CBGs and of each of the N TBs, wherein the first feedback information is used to feed back either the receiving status of each of the M CBGs or a receiving status of each of the N TBs, the receiving status of each CBG is used to indicate whether each of the M CBGs has passed verification, the receiving status of each TB is used to indicate whether each of the N TBs has passed verification; and
sending (S330) the first feedback information,
wherein the quantity of bits of the first feedback information is equal to N corresponding to TB-level feedback for the N TBs in the following cases:
when receiving statuses of all CBGs comprised in each of the N TBs indicate that all the CBGs have been successfully received and at least one TB of the N TBs has passed verification, or
when receiving statuses of all CBGs comprised in each of the N TBs indicate that none of the CBGs has been successfully received, or
when receiving statuses of all CBGs comprised in each of the N TBs indicate that all the CBGs have been successfully received and at least one TB of the N TBs has not passed verification,
and
wherein the quantity of bits of the first feedback information is equal to M corresponding to CBG-level feedback for the M CBGs,
when receiving statuses of all CBGs comprised in at least one of the N TBs indicate that among all the CBGs, at least one CBG has been successfully received and at least one CBG has not been successfully received,
wherein the sending the first feedback information comprises:
when the first feedback information is equal to M bits, sending, on a first resource based on a first uplink control channel format, the first feedback information used to feed back the receiving statuses of the M CBGs; and
when the first feedback information is equal to N bits, sending, on a second resource based on a second uplink control channel format, the first feedback information used to feed back the receiving statuses of the N TBs, and wherein
the first resource is different from the second resource, and/or the first uplink control channel format is different from the second uplink control channel format.

2. A method for receiving feedback information performed by a network device, comprising:
sending (S510) M code block groups CBGs, wherein the M CBs belong to N transport blocks TBs, M is an integer greater than 1, and N is an integer greater than 1; and
detecting (S520) first feedback information on a first resource based on a first uplink control channel format and a second resource based on a second uplink control channel format, wherein the first resource is different from the second resource and/or the first uplink control channel format is different from the second uplink control channel format, and the first feedback information is used to feed back either a receiving status of each of the M CBGs or a receiving status of each of the N TBs, the receiving status of each CBG is used to indicate whether each of the M CBGs has passed verification, the receiving status of each TB is used to indicate whether each of the N TBs has passed verification, wherein
the first resource is used to carry the feedback information for feeding back the receiving status of each of the M CBGs, wherein the quantity of bits of the first feedback information is equal to M corresponding to CBG-level feedback for the M CBGs; and
the second resource is used to carry the feedback information for feeding back the receiving status of each of the N TBs, wherein the quantity of bits of the first feedback information is equal to N corresponding to TB-level feedback for the N TBs.

3. A terminal device (700) for sending feedback information, comprising a processing unit (702) and a communications unit (703), wherein
the communications unit (703) is configured to receive M code block groups CBGs, wherein the M CBGs belong to N transport blocks TBs, M is an integer greater than 1, and N is an integer greater than 1;
the processing unit (702) is configured to generate first feedback information based on a receiving status of each of the M CBGs and of each of the N TBs received by the communications unit, wherein the first feedback information is used to feed back either the receiving status of each of the M CBGs or a receiving status of each of the N TBs, the receiving status of each CBG is used to indicate whether each of the M CBGs has passed verification, the receiving status of each TB is used to indicate whether each of the N TBs has passed verification; and
the communications unit (703) is further configured to send the first feedback information generated by the processing unit,
wherein the quantity of bits of the first feedback information is equal to N corresponding to TB-level feedback for the N TBs in the following cases:
when receiving statuses of all CBGs comprised in each of the N TBs indicate that all the CBGs have been successfully received and at least one TB of the N TBs has passed verification, or
when receiving statuses of all CBGs comprised in each of the N TBs indicate that none of the CBGs has been successfully received, or
when receiving statuses of all CBGs comprised in each of the N TBs indicate that all the CBGs have been successfully received and at least one TB of the N TBs has not passed verification,
and
wherein the quantity of bits of the first feedback information is equal to M corresponding to CBG-level feedback for the M CBGs,
when receiving statuses of all CBGs comprised in at least one of the N TBs indicate that among all the CBGs, at least one CBG has been successfully received and at least one CBG has not been successfully received, generating the first feedback information used to feed back the receiving statuses of the M CBGs, wherein the quantity of bits of the first feedback information is equal to M, and
wherein the communications unit (703) is further configured to:
when the first feedback information is equal to M bits, sending, on a first resource based on a first uplink control channel format, the first feedback information used to feed back the receiving statuses of the M CBGs; and
when the first feedback information is equal to N bits, sending, on a second resource based on a second uplink control channel format, the first feedback information used to feed back the receiving statuses of the N TBs, and wherein
the first resource is different from the second resource, and/or the first uplink control channel format is different from the second uplink control channel format.

4. A network device (1100) for receiving feedback information, comprising a processing unit (1102) and a communications unit (1103), wherein
the communications unit (1103) is configured to send M code block groups CBGs, wherein the M CBs belong to N transport blocks TBs, M is an integer greater than 1, and N is an integer greater than 1; and
the processing unit (1102) is configured to control the communications unit (1103) to detect first feedback information on a first resource based on a first uplink control channel format and a second resource based on a second uplink control channel format, wherein the first resource is different from the second resource and/or the first uplink control channel format is different from the second uplink control channel format, and the first feedback information is used to feed back either a receiving status of each of the M CBGs or a receiving status of each of the N TBs, the receiving status of each CBG is used to indicate whether each of the M CBGs has passed verification, the receiving status of each TB is used to indicate whether each of the N TBs has passed verification, wherein
the first resource is used to carry the feedback information for feeding back the receiving status of each of the M CBGs, wherein the quantity of bits of the first feedback information is equal to M corresponding to CBG-level feedback for the M CBGs; and
the second resource is used to carry the feedback information for feeding back the receiving status of each of the N TBs, wherein the quantity of bits of the first feedback information is equal to N corresponding to TB-level feedback for the N TBs.

5. A computer program product comprising instructions which, when the program is executed by a computer, cause the computer to carry out the steps of the method of claim 1.

6. A computer program product comprising instructions which, when the program is executed by a computer, cause the computer to carry out the steps of the method of claim 2.

## Patentansprüche

1. Verfahren zum Senden von Feedbackinformationen, das von einem Endgerät durchgeführt wird, umfassend:
Empfangen (S310) von M Codeblockgruppen, CBGs, wobei die M CBGs zu N Transportblöcken TBs gehören, M eine ganze Zahl größer als 1 ist und N eine ganze Zahl größer als 1 ist;
Erzeugen (S320) erster Feedbackinformationen basierend auf einem Empfangsstatus jeder der M CBGs und jedes der N TBs, wobei die ersten Feedbackinformationen verwendet werden, um entweder den Empfangsstatus jeder der M CBGs oder einen Empfangsstatus jedes der N TBs zurückzumelden, wobei der Empfangsstatus jeder CBG verwendet wird, um anzugeben, ob jede der M CBGs die Verifizierung bestanden hat, wobei der Empfangsstatus jedes TB verwendet wird, um anzugeben, ob jeder der N TBs die Verifizierung bestanden hat; und
Senden (S330) der ersten Feedbackinformationen,
wobei die Menge an Bits der ersten Feedbackinformationen gleich N ist, welches einer Rückmeldung auf TB-Ebene für die N TBs in den folgenden Fällen entspricht:
wenn die Empfangsstatus aller CBGs, die in jedem der N TBs enthalten sind, angeben, dass alle CBGs erfolgreich empfangen wurden und mindestens ein TB der N TBs die Verifizierung bestanden hat, oder
wenn die Empfangsstatus aller CBGs, die in jedem der N TBs enthalten sind, angeben, dass keine der CBGs erfolgreich empfangen wurde, oder
wenn die Empfangsstatus aller CBGs, die in jedem der N TBs enthalten sind, angeben, dass alle CBGs erfolgreich empfangen wurden und mindestens ein TB der N TBs die Verifizierung nicht bestanden hat,
und
wobei die Menge an Bits der ersten Feedbackinformationen gleich M ist, welches einer Rückmeldung auf CBG-Ebene für die M CBGs entspricht,
wenn die Empfangsstatus aller CBGs, die in mindestens einem der N TBs enthalten sind, angeben, dass unter allen CBGs mindestens eine CBG erfolgreich empfangen wurde und mindestens eine CBG nicht erfolgreich empfangen wurde,
wobei das Senden der ersten Feedbackinformationen Folgendes umfasst:
wenn die ersten Feedbackinformationen gleich M Bits sind, Senden der ersten Feedbackinformationen, die verwendet werden, um die Empfangsstatus der M CBGs zurückzumelden, auf einer ersten Ressource basierend auf einem ersten Uplink-Steuerkanalformat; und
wenn die ersten Feedbackinformationen gleich N Bits sind, Senden der ersten Feedbackinformationen, die verwendet werden, um die Empfangsstatus der N TBs zurückzumelden, auf einer zweiten Ressource basierend auf einem zweiten Uplink-Steuerkanalformat, und wobei
sich die erste Ressource von der zweiten Ressource unterscheidet und/oder sich das erste Uplink-Steuerkanalformat von dem zweiten Uplink-Steuerkanalformat unterscheidet.

2. Verfahren zum Empfangen von Feedbackinformationen, die von einer Netzwerkvorrichtung durchgeführt werden, umfassend:
Senden (S510) von M Codeblockgruppen CBGs, wobei die M CBs zu N Transportblöcken TBs gehören, M eine ganze Zahl größer als 1 ist und N eine ganze Zahl größer als 1 ist; und
Erfassen (S520) erster Feedbackinformationen auf einer ersten Ressource basierend auf einem ersten Uplink-Steuerkanalformat und einer zweiten Ressource basierend auf einem zweiten Uplink-Steuerkanalformat, wobei sich die erste Ressource von der zweiten Ressource unterscheidet und/oder sich das erste Uplink-Steuerkanalformat von dem zweiten Uplink-Steuerkanalformat unterscheidet, und die ersten Feedbackinformationen verwendet werden, um entweder einen Empfangsstatus jeder der M CBGs oder einen Empfangsstatus jedes der N TBs zurückzumelden, wobei der Empfangsstatus jeder CBG verwendet wird, um anzugeben, ob jede der M CBGs die Verifizierung bestanden hat, wobei der Empfangsstatus jedes TB verwendet wird, um anzugeben, ob jeder der N TBs die Verifizierung bestanden hat, wobei
die erste Ressource verwendet wird, um die Feedbackinformationen zum Rückmelden des Empfangsstatus jeder der M CBGs zu tragen, wobei die Menge an Bits der ersten Feedbackinformationen gleich M ist, welches einer Rückmeldung auf CBG-Ebene für die M CBGs entspricht; und
die zweite Ressource verwendet wird, um die Feedbackinformationen zum Rückmelden des Empfangsstatus jedes der N TBs zu tragen, wobei die Menge an Bits der ersten Feedbackinformationen gleich N ist, welches einer Rückmeldung auf TB-Ebene für die N TBs entspricht.

3. Endgerät (700) zum Senden von Feedbackinformationen, umfassend eine Verarbeitungseinheit (702) und eine Kommunikationseinheit (703), wobei
die Kommunikationseinheit (703) dazu konfiguriert ist, M Codeblockgruppen CBGs zu empfangen, wobei die M CBGs zu N Transportblöcken TBs gehören, M eine ganze Zahl größer als 1 ist und N eine ganze Zahl größer als 1 ist;
die Verarbeitungseinheit (702) dazu konfiguriert ist, erste Feedbackinformationen basierend auf einem Empfangsstatus jeder der M CBGs und jedes der N TBs, die durch die Kommunikationseinheit empfangen werden, zu erzeugen, wobei die ersten Feedbackinformationen verwendet werden, um entweder den Empfangsstatus jeder der M CBGs oder einen Empfangsstatus jedes der N TBs zurückzumelden, wobei der Empfangsstatus jeder CBG verwendet wird, um anzugeben, ob jede der M CBGs die Verifizierung bestanden hat, wobei der Empfangsstatus jedes TB verwendet wird, um anzugeben, ob jeder der N TBs die Verifizierung bestanden hat; und
die Kommunikationseinheit (703) ferner dazu konfiguriert ist, die von der Verarbeitungseinheit erzeugten ersten Feedbackinformationen zu senden,
wobei die Menge an Bits der ersten Feedbackinformationen gleich N ist, welches einer Rückmeldung auf TB-Ebene für die N TBs in den folgenden Fällen entspricht:
wenn die Empfangsstatus aller CBGs, die in jedem der N TBs enthalten sind, angeben, dass alle CBGs erfolgreich empfangen wurden und mindestens ein TB der N TBs die Verifizierung bestanden hat, oder
wenn die Empfangsstatus aller CBGs, die in jedem der N TBs enthalten sind, angeben, dass keine der CBGs erfolgreich empfangen wurde, oder
wenn die Empfangsstatus aller CBGs, die in jedem der N TBs enthalten sind, angeben, dass alle CBGs erfolgreich empfangen wurden und mindestens ein TB der N TBs die Verifizierung nicht bestanden hat,
und
wobei die Menge an Bits der ersten Feedbackinformationen gleich M ist, welches einer Rückmeldung auf CBG-Ebene für die M CBGs entspricht,
wenn Empfangsstatus aller CBGs, die in mindestens einem der N TBs enthalten sind, angeben, dass unter allen CBGs mindestens eine CBG erfolgreich empfangen wurde und mindestens eine CBG nicht erfolgreich empfangen wurde, Erzeugen der ersten Feedbackinformationen, die zum Rückmelden der Empfangsstatus der M CBGs verwendet werden, wobei die Menge an Bits der ersten Feedbackinformationen gleich M ist, und
wobei die Kommunikationseinheit (703) ferner zu Folgendem konfiguriert ist:
wenn die ersten Feedbackinformationen gleich M Bits sind, Senden der ersten Feedbackinformationen, die verwendet werden, um die Empfangsstatus der M CBGs zurückzumelden, auf einer ersten Ressource basierend auf einem ersten Uplink-Steuerkanalformat;
und
wenn die ersten Feedbackinformationen gleich N Bits sind, Senden der ersten Feedbackinformationen, die verwendet werden, um die Empfangsstatus der N TBs zurückzumelden, auf einer zweiten Ressource basierend auf einem zweiten Uplink-Steuerkanalformat, und wobei
sich die erste Ressource von der zweiten Ressource unterscheidet und/oder sich das erste Uplink-Steuerkanalformat von dem zweiten Uplink-Steuerkanalformat unterscheidet.

4. Netzwerkvorrichtung (1100) zum Empfangen von Feedbackinformationen, umfassend eine Verarbeitungseinheit (1102) und eine Kommunikationseinheit (1103), wobei
die Kommunikationseinheit (1103) dazu konfiguriert ist, M Codeblockgruppen CBGs zu empfangen, wobei die M CBs zu N Transportblöcken TBs gehören, M eine ganze Zahl größer als 1 ist und N eine ganze Zahl größer als 1 ist; und
die Verarbeitungseinheit (1102) dazu konfiguriert ist, die Kommunikationseinheit (1103) zu steuern, um erste Feedbackinformationen auf einer ersten Ressource basierend auf einem ersten Uplink-Steuerkanalformat und einer zweiten Ressource basierend auf einem zweiten Uplink-Steuerkanalformat zu erfassen, wobei sich die erste Ressource von der zweiten Ressource unterscheidet und/oder sich das erste Uplink-Steuerkanalformat von dem zweiten Uplink-Steuerkanalformat unterscheidet, und die ersten Feedbackinformationen verwendet werden, um entweder einen Empfangsstatus jeder der M CBGs oder einen Empfangsstatus jedes der N TBs zurückzumelden, wobei der Empfangsstatus jeder CBG verwendet wird, um anzugeben, ob jede der M CBGs die Verifizierung bestanden hat, wobei der Empfangsstatus jedes TB verwendet wird, um anzugeben, ob jeder der N TBs die Verifizierung bestanden hat, wobei
die erste Ressource verwendet wird, um die Feedbackinformationen zum Rückmelden des Empfangsstatus jeder der M CBGs zu tragen, wobei die Menge an Bits der ersten Feedbackinformationen gleich M ist, welches einer Rückmeldung auf CBG-Ebene für die M CBGs entspricht; und
die zweite Ressource verwendet wird, um die Feedbackinformationen zum Rückmelden des Empfangsstatus jedes der N TBs zu tragen, wobei die Menge an Bits der ersten Feedbackinformationen gleich N ist, welches einer Rückmeldung auf TB-Ebene für die N TBs entspricht.

5. Computerprogrammprodukt, umfassend Anweisungen, welche bei Ausführung des Programms durch einen Computer bewirken, dass der Computer die Schritte des Verfahrens nach Anspruch 1 ausführt.

6. Computerprogrammprodukt, umfassend Anweisungen, welche bei Ausführung des Programms durch einen Computer bewirken, dass der Computer die Schritte des Verfahrens nach Anspruch 2 ausführt.

## Revendications

1. Procédé d'envoi d'informations de rétroaction mis en oeuvre par un dispositif terminal, comprenant :
la réception (S310) de M groupes de blocs de code, CBG, les M CBG appartiennent à N blocs de transport TB, M est un entier supérieur à 1, et N est un entier supérieur à 1 ;
la génération (S320) de premières informations de rétroaction sur la base d'un état de réception de chacun des M CBG et de chacun des N TB, dans lequel les premières informations de rétroaction sont utilisées pour renvoyer soit l'état de réception de chacun des M CBG, soit un état de réception de chacun des N TB, l'état de réception de chaque CBG est utilisé pour indiquer si chacun des M CBG a réussi la vérification, l'état de réception de chaque TB est utilisé pour indiquer si chacun des N TB a réussi la vérification ; et
l'envoi (S330) des premières informations de rétroaction,
dans lequel la quantité de bits des premières informations de rétroaction est égale à N correspondant à une rétroaction de niveau TB pour les N TB dans les cas suivants :
lorsque les états de réception de tous les CBG compris dans chacun des N TB indiquent que tous les CBG ont été reçus avec succès et qu'au moins un TB des N TB a réussi la vérification, ou
lorsque les états de réception de tous les CBG compris dans chacun des N TB indiquent qu'aucun des CBG n'a été reçu avec succès, ou
lorsque les états de réception de tous les CBG compris dans chacun des N TB indiquent que tous les CBG ont été reçus avec succès et qu'au moins un TB des N TB n'a pas réussi la vérification,
et
dans lequel la quantité de bits des premières informations de rétroaction est égale à M correspondant à une rétroaction de niveau CBG pour les M CBG,
lorsque les états de réception de tous les CBG compris dans au moins l'un des N TB indiquent que parmi tous les CBG, au moins un CBG a été reçu avec succès et qu'au moins un CBG n'a pas été reçu avec succès,
dans lequel l'envoi des premières informations de rétroaction comprend :
lorsque les premières informations de rétroaction sont égales à M bits, l'envoi, sur une première ressource basée sur un premier format de canal de commande de liaison montante, des premières informations de rétroaction utilisées pour renvoyer les états de réception des M CBG ; et
lorsque les premières informations de rétroaction sont égales à N bits, l'envoi, sur une seconde ressource basée sur un second format de canal de commande de liaison montante, des premières informations de rétroaction utilisées pour renvoyer les états de réception des N TB, et dans lequel
la première ressource est différente de la seconde ressource, et/ou le premier format de canal de commande de liaison montante est différent du second format de canal de commande de liaison montante.

2. Procédé de réception d'informations de rétroaction mis en oeuvre par un dispositif de réseau, comprenant :
l'envoi (S510) de M groupes de blocs de code CBG, dans lequel les M CB appartiennent à N blocs de transport TB, M étant un entier supérieur à 1 et N étant un entier supérieur à 1 ; et
la détection (S520) de premières informations de rétroaction sur une première ressource basée sur un premier format de canal de commande de liaison montante et une seconde ressource basée sur un second format de canal de commande de liaison montante, dans lequel la première ressource est différente de la seconde ressource et/ou le premier format de canal de commande de liaison montante est différent du second format de canal de commande de liaison montante, et les premières informations de rétroaction sont utilisées pour renvoyer soit un état de réception de chacun des M CBG, soit un état de réception de chacun des N TB, l'état de réception de chaque CBG est utilisé pour indiquer si chacun des M CBG a réussi la vérification, l'état de réception de chaque TB est utilisé pour indiquer si chacun des N TB a réussi la vérification, dans lequel
la première ressource est utilisée pour transporter les informations de rétroaction pour renvoyer l'état de réception de chacun des M CBG, dans lequel la quantité de bits des premières informations de rétroaction est égale à M correspondant à une rétroaction de niveau CBG pour les M CBG ; et
la seconde ressource est utilisée pour transporter les informations de rétroaction pour renvoyer l'état de réception de chacun des N TB, dans lequel la quantité de bits des premières informations de rétroaction est égale à N correspondant à une rétroaction de niveau TB pour les N TB.

3. Dispositif terminal (700) pour envoyer des informations de rétroaction, comprenant une unité de traitement (702) et une unité de communication (703), dans lequel
l'unité de communication (703) est configurée pour recevoir M groupes de blocs de code CBG, dans lequel les M CBG appartiennent à N blocs de transport TB, M est un entier supérieur à 1, et N est un entier supérieur à 1 ;
l'unité de traitement (702) est configurée pour générer des premières informations de rétroaction sur la base d'un état de réception de chacun des M CBG et de chacun des N TB reçus par l'unité de communication, dans lequel les premières informations de rétroaction sont utilisées pour renvoyer soit l'état de réception de chacun des M CBG, soit un état de réception de chacun des N TB, l'état de réception de chaque CBG est utilisé pour indiquer si chacun des M CBG a réussi la vérification, l'état de réception de chaque TB est utilisé pour indiquer si chacun des N TB a réussi la vérification ; et
l'unité de communication (703) est en outre configurée pour envoyer les premières informations de rétroaction générées par l'unité de traitement,
dans lequel la quantité de bits des premières informations de rétroaction est égale à N correspondant à une rétroaction de niveau TB pour les N TB dans les cas suivants :
lorsque les états de réception de tous les CBG compris dans chacun des N TB indiquent que tous les CBG ont été reçus avec succès et qu'au moins un TB des N TB a réussi la vérification, ou
lorsque les états de réception de tous les CBG compris dans chacun des N TB indiquent qu'aucun des CBG n'a été reçu avec succès, ou
lorsque les états de réception de tous les CBG compris dans chacun des N TB indiquent que tous les CBG ont été reçus avec succès et qu'au moins un TB des N TB n'a pas réussi la vérification,
et
dans lequel la quantité de bits des premières informations de rétroaction est égale à M correspondant à une rétroaction de niveau CBG pour les M CBG,
lorsque les états de réception de tous les CBG compris dans au moins l'un des N TB indiquent que parmi tous les CBG, au moins un CBG a été reçu avec succès et qu'au moins un CBG n'a pas été reçu avec succès, générer les premières informations de rétroaction utilisées pour renvoyer les états de réception des M CBG, dans lequel la quantité de bits des premières informations de rétroaction est égale à M, et
dans lequel l'unité de communication (703) est en outre configurée pour :
lorsque les premières informations de rétroaction sont égales à M bits, envoyer, sur une première ressource basée sur un premier format de canal de commande de liaison montante, les premières informations de rétroaction utilisées pour renvoyer les états de réception des M CBG ; et
lorsque les premières informations de rétroaction sont égales à N bits, envoyer, sur une seconde ressource basée sur un second format de canal de commande de liaison montante, les premières informations de rétroaction utilisées pour renvoyer les états de réception des N TB, et dans lequel
la première ressource est différente de la seconde ressource, et/ou le premier format de canal de commande de liaison montante est différent du second format de canal de commande de liaison montante.

4. Dispositif de réseau (1100) pour recevoir des informations de rétroaction, comprenant une unité de traitement (1102) et une unité de communication (1103), dans lequel
l'unité de communication (1103) est configurée pour envoyer M groupes de blocs de code CBG, dans lequel les M CBG appartiennent à N blocs de transport TB, M est un entier supérieur à 1, et N est un entier supérieur à 1 ; et
l'unité de traitement (1102) est configurée pour commander l'unité de communication (1103) pour détecter des premières informations de rétroaction sur une première ressource basée sur un premier format de canal de commande de liaison montante et une seconde ressource basée sur un second format de canal de commande de liaison montante, dans lequel la première ressource est différent de la seconde ressource et/ou le premier format de canal de commande de liaison montante étant différent du second format de canal de commande de liaison montante, et les premières informations de rétroaction sont utilisées pour renvoyer soit un état de réception de chacun des M CBG, soit un état de réception de chacun des N TB, l'état de réception de chaque CBG est utilisé pour indiquer si chacun des M CBG a réussi la vérification, l'état de réception de chaque TB est utilisé pour indiquer si chacun des N TB a réussi la vérification, dans lequel
la première ressource est utilisée pour transporter les informations de rétroaction pour renvoyer l'état de réception de chacun des M CBG, dans lequel la quantité de bits des premières informations de rétroaction est égale à M correspondant à une rétroaction de niveau CBG pour les M CBG ; et
la seconde ressource est utilisée pour transporter les informations de rétroaction pour renvoyer l'état de réception de chacun des N TB, dans lequel la quantité de bits des premières informations de rétroaction est égale à N correspondant à une rétroaction de niveau TB pour les N TB.

5. Produit de programme informatique comprenant des instructions qui, lorsque le programme est exécuté par un ordinateur, amènent l'ordinateur à mettre en oeuvre les étapes du procédé selon la revendication 1.

6. Produit de programme informatique comprenant des instructions qui, lorsque le programme est exécuté par un ordinateur, amènent l'ordinateur à mettre en oeuvre les étapes du procédé selon la revendication 2.
